# EUROPEAN PATENT APPLICATION

(11) **EP 4 303 675 A1**
(43) Date of publication of application: **10.01.2024**
(21) Application number: 23181460.9
(22) Date of filing: 26.06.2023
(51) Int. Cl.: G05B 19/05, G06N 20/00, H04L 9/40, G05B 19/418, G06F 21/55

(54) **PROGRAMMABLE LOGIC CONTROLLER (PLC) SECURITY MODEL**

(30) Priority: 08.07.2022 US 202217860435
(71) Applicant: Rockwell Automation Technologies, Inc., Mayfield Heights OH 44124 (US)
(72) Inventor: Reynolds, Jordan C., Mayfield Heights, OH (US); Hagerbaumer, John J., Mayfield Heights, OH, (US); Mahr, Troy W., Mayfield Heights, OH, (US); Jacobsen, Thomas K., Mayfield Heights, OH, (US); Scaturchio, Giancarlo, Mayfield Heights, OH, (US)
(74) Representative: Grünecker Patent- und Rechtsanwälte PartG mbB

(57) **Abstract**

Various embodiments of the present technology generally relate to industrial automation environments. More specifically, embodiments include systems and methods to detect malicious behavior in an industrial automation environment. In some examples, a security component generates feature vectors that represent operations of a Programmable Logic Controller (PLC) and supplies the feature vectors to a machine learning engine. The security component processes a machine learning output that indicates when anomalous behavior is detected in the operations of the PLC. When anomalous behavior is detected in the operations of the PLC, the security component generates and transfers an alert that characterizes the anomalous behavior.

## Description

### TECHNICAL FIELD

Various implementations disclosed herein relate to industrial automation technology, and more specifically, to anomaly detection in industrial controllers.

### BACKGROUND

Industrial manufacturing environments generate huge quantities of data at very fast speeds making the extraction of enterprise-level insights challenging. In industrial automation environments, control systems are used to drive various operations along an industrial line. Control programs are developed by programmers and comprise a set of program tags to carry out an industrial operation. The program tags comprise chunks of the control code and correspond to industrial assets, devices, and sensors. Control code is used by control systems like Programmable Logic Controllers (PLCs) to drive the industrial assets, devices, and sensors in an industrial process. The PLCs communicate with a wide variety of other assets within industrial manufacturing like industrial devices. Human Machine Interfaces (HMI), orchestrators, and human operators. These numerous communication connections create security vulnerabilities in the PLCs.

Machine learning algorithms are designed to recognize patterns and automatically improve through training and the use of data. Examples of machine learning algorithms include artificial neural networks, nearest neighbor methods, gradient-boosted trees, ensemble random forests, support vector machines, naive Bayes methods, and linear regressions. A machine learning algorithm comprises an input layer and an output layer, wherein complex analyzation takes places between the two layers. Various training methods are used to train machine learning algorithms wherein an algorithm is continually updated and optimized until a satisfactory model is achieved. One advantage of machine learning algorithms is their ability to learn by example, rather than needing to be manually programmed to perform a task, especially when the tasks would require a near-impossible amount of programming to perform the operations in which they are used. Unfortunately, industrial manufacturing environments do not effectively and efficiently utilize machine learning functionality to combat the security vulnerabilities in PLCs.

### OVERVIEW

This Overview is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

Various embodiments of the present technology generally relate to solutions for integrating machine learning models into industrial automation environments. Some embodiments comprise a system to detect malicious behavior in an industrial automation environment. In some examples, the system comprises a design component. The security component generates feature vectors that represent operations of a Programmable Logic Controller (PLC) and supplies the feature vectors to a machine learning engine. The security component processes a machine learning output that indicates when anomalous behavior is detected in the operations of the PLC. When anomalous behavior is detected in the operations of the PLC, the security component generates and transfers an alert that characterizes the anomalous behavior.

Some embodiments comprise methods to detect malicious behavior in an industrial automation environment. The method entails generating, by a system comprising a processor, feature vectors that represent operations of a PLC and supplying the feature vectors to a machine learning engine. The method continues by processing, by the system, a machine learning output that indicates when anomalous behavior is detected in the operations of the PLC. When anomalous behavior is detected in the operations of the PLC, the method continues with generating and transferring, by the system, an alert that characterizes the anomalous behavior.

Some embodiments comprise a non-transitory computer-readable medium stored thereon instructions to detect malicious behavior in an industrial automation environment. The instructions, in response to execution, cause a system comprising a processor to perform operations. In some examples, the operations comprise generating feature vectors that represent operations of a PLC and supplying the feature vectors to a machine learning engine. The operations further comprise processing a machine learning output that indicates when anomalous behavior is detected in the operations of the PLC. When anomalous behavior is detected in the operations of the PLC, the operations further comprise generating and transferring an alert that characterizes the anomalous behavior.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an exemplary industrial automation environment to detect malicious behavior in a Programmable Logic Controller (PLC) of the industrial automation environment.
Figure 2 illustrates an exemplary operation of an industrial automation environment to detect malicious behavior in a PLC of the industrial automation environment.
Figure 3 illustrates an exemplary industrial automation environment to detect malicious behavior in a PLC of the industrial automation environment.
Figure 4 illustrates an exemplary operation of an industrial automation environment to detect malicious behavior in a PLC of the industrial automation environment.
Figure 5 illustrates an exemplary user interface in the industrial automation environment.
Figure 6 illustrates an exemplary user interface in the industrial automation environment.
Figure 7 illustrates an exemplary computing device that may be used in accordance with some embodiments of the present technology.

The drawings have not necessarily been drawn to scale. Similarly, some components or operations may not be separated into different blocks or combined into a single block for the purposes of discussion of some of the embodiments of the present technology. Moreover, while the technology is amendable to various modifications and alternative forms, specific embodiments have been shown by way of example in the drawings and are described in detail below. The intention, however, is not to limit the technology to the particular embodiments described. On the contrary, the technology is intended to cover all modifications, equivalents, and alternatives falling within the scope of the technology as defined by the appended claims.

### DETAILED DESCRIPTION

The following description and associated figures teach the best mode of the invention. For the purpose of teaching inventive principles, some conventional aspects of the best mode may be simplified or omitted. The following claims specify the scope of the invention. Note that some aspects of the best mode may not fall within the scope of the invention as specified by the claims. Thus, those skilled in the art will appreciate variations from the best mode that fall within the scope of the invention. Those skilled in the art will appreciate that the features described below can be combined in various ways to form multiple variations of the invention. As a result, the invention is not limited to the specific examples described below, but only by the claims and their equivalents.

Various embodiments of the present technology generally relate to solutions for PLC security in industrial automation environments. More specifically, embodiments of the present technology include systems and methods for utilizing machine learning systems to detect and prevent anomalous or malicious behavior in Programmable Logic Controllers (PLCs). Generally, PLCs receive and execute industrial control programs that comprise instructions for controlling and performing certain operations within an industrial environment. The PLCs generate control signaling based on the execution of the control program and transfer the control signaling to control downstream devices, machinery, and automated processes.

The present technology serves to enhance industrial control by enabling the use of machine learning models to reduce security vulnerabilities in PLCs. Industrial automation environments often fail to effectively integrate machine learning models into control systems in industrial automation environments. In an implementation of the present technology, machine learning models may be made available to operators in an industrial security environment. Security environments allow a plant operator to review the operating states of systems within the industrial automation environment to determine when systems deviate from their normal operating states.

In some embodiments, machine learning models may be connected with other elements within the industrial automation environment like PLCs. In an embodiment, a PLC may report is operating state to a machine learning model. In response, the machine learning model may generate a machine learning outputs when the PLC deviates from its normal operating behavior. For example, the machine learning model may create a statistical model that represents the PLC. The machine learning model may compare operational metrics reported by the PLC with the statistical model representing the PLC to identify any anomalous or malicious behavior in the PLC.

A machine learning model comprises one or more machine learning algorithms that are trained based on historical data and/or other types of training data. A machine learning model may employ one or more machine learning algorithms through which data can be analyzed to identify patterns, make decisions, make predictions, or similarly produce output that can inform control code and/or parameters. Examples of machine learning algorithms that may be employed solely or in conjunction with one another include artificial neural networks, neural network auto encoders, unsupervised anomaly detection algorithms, nearest neighbor methods, ensemble random forests, support vector machines, naive Bayes methods, linear regressions, or similar machine learning techniques or combinations thereof capable of predicting output based on input data. Determining which machine learning methods to use may depend on the specific purpose or functions required in a particular industrial setting. Machine learning models may be deployed on premises in an industrial automation environment or off-site. For example, the machine learning model may be implemented in a security environment and have a live connection with PLCs configured to implement control programs.

To accompany the use of control program integrated models, corresponding faceplates, displays, Graphical User Interfaces (GUIs), and the like are contemplated herein to provide intuitive representations and interfaces to for detecting anomalous and malicious behavior in PLCs. A GUI may comprise basic controls and/or visuals relevant to identifying, and responding to, anomalous or malicious behavior detected in PLCs. In this manner, machine learning can be brought into the security environment. For example, a security operator may interact with a GUI to perform a task such as reviewing machine learning anomaly predictions and generating commands to respond to the detected anomalies. The GUI may also be useful for performing tasks such as training models, offsetting model parameters, tuning parameters of the model, generating statistical representations of PLCs, providing inputs, or overriding the model.

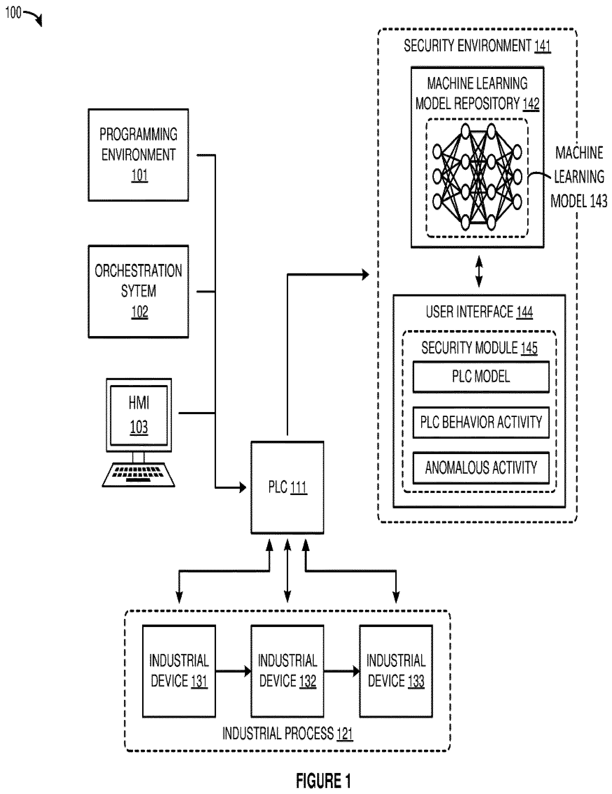

Now referring to the Figures, Figure 1 illustrates industrial automation environment 100 to detect malicious behavior in a Programmable Logic Controller (PLC). Industrial automation environment 100 performs services like factory automation, factory control, machine control, smart manufacturing, machine communication and organization, and the like. Industrial automation environment 100 comprises programming environment 101, orchestration system 102, Human Machine Interface (HMI) 103, PLC 111, industrial process 121, industrial devices 131-133, and security environment 141. Security environment 141 comprises machine learning model repository 142. machine learning model 143, user interface 144, and security module 145. In other examples, industrial automation environment 100 may include fewer or additional components than those illustrated in Figure 1. Likewise, the illustrated components of industrial automation environment 100 may include fewer or additional components, assets, or connections than shown. Each of programming environment 101. orchestration system 102, HMI 103, PLC 111, repository 142, and user interface 144 may be representative of a single computing apparatus or multiple computing apparatuses.

Programming environment 101 is representative of one or more computing apparatuses configured to host an integrated design application to generate control programs to implement industrial process 121. It should be appreciated that the specific number of applications/modules hosted by the computing devices of programming environment 101 is not limited. Exemplary integrated design applications comprise Studio 5000^{®} and the like. The control programs generated in programming environment 101 comprise machine instructions that direct the operations of industrial devices 131-133 in response to execution by PLC 111 to implement industrial process 121. The control programs may comprise functional block diagrams, ladder logic programs, or some other type of machine instructions. Programming environment 101 may transfer control program for delivery to PLC 111 to implement and control the industrial process 121. Programming environment 101 may comprise user interface systems that allow programmers or other types of human operators to interact with the integrated design application to generate control programs. Programming environment 101 may comprise transceiver systems that allow the integrated design application to upload the control programs to PLC 111.

Orchestration system 102 is representative of one or more computing apparatuses configured to host a factory management application to oversee the operations of PLC 111. It should be appreciated that the specific number of applications/modules hosted by the computing devices of orchestration environment 102 is not limited. Exemplary factory management applications comprise Pavilion8^{®} and the like. The factory management application hosted by orchestration system 102 provides an intelligence layer on top of PLC 111 to control and coordinate the operation of PLC 111. For example, orchestration system 102 may direct PLC 111 when to execute a control program generated by programming environment 101 and model the automated control operations used by PLC 111 to control industrial devices 131-133. Orchestration system 102 may comprise user interface systems that allow operators or other types of human operators to interact with the factory management application to assess the control operations of PLC 111. Orchestration system 102 may comprise transceiver systems that allow the factory management application to exchange control data with PLC 111.

HMI 103 is representative of a user interface computing system that allows factory operators to view and affect the operations of PLC 111. The user interface computing system of HMI 103 is configured to host an application(s) to visualize the operations of and provide user feedback for PLC 111. HMI 103 comprises one or more user interface components like displays, kiosks, keyboards, touchscreens, tablet devices, and the like. The user interface components display environment view of industrial automation environment 100, specifically. The one or more user interface components of HMI 103 comprises a GUI that allows an operator to interact with the application(s) hosted by computing device 102, including the application(s) to view the operations of, and provide user feedback for, PLC 111.

Programmable Logic Controller (PLC) 111 comprises one or more computing devices configured to implement control programs generated in programming environment 101 to control industrial process 121. For example, PLC 111 may receive and execute a ladder logic control program received from programming environment 101 and responsively transfer corresponding control signaling to industrial devices 131-133. PLC 111 may additionally receive inputs from orchestration system 102 and HMI 103 that affect the operations of PLC 111. For example, PLC 111 may receive an input from orchestration system 102 to slow operations to coordinate PLC 111 with other PLCs in industrial automation environment 100. In some examples, PLC 111 reports operational data to security environment 141. The operational data indicates the inputs/requests received by PLC 111. control commands transferred by PLC 111, or other types of operational data that characterizes the behavior of PLC 111.

Industrial process 121 is representative of a manufacturing, chemical production, food processing, or any other type of industrial process. Industrial devices 131-133 are representative of machines configured to carry out industrial process 121. Industrial devices 131-133 are representative of pumps, motors, heat exchanges, reactors, food processing systems, or any other type of industrial device. Typically, the type of machines represented by industrial devices 131-133 depend in part on the type of process that industrial process 121 is representative of. Industrial devices 131-133 receive control signaling generated by PLC 111 in response to executing a control program generated in programming environment 101. Industrial devices 131-133 operate in response to the control signaling to implement industrial process 121. The control signaling drives actuators in industrial devices 131-133 that dictate the operations of industrial devices 131-133. For example, the control signaling may correspond to an actuator setting that sets a motor speed in industrial device 141 to a desired value. In other examples, the control signaling may correspond to an actuator setting that sets a pump valve to an open position. It should be appreciated that the type of operations performed by industrial devices 131-133 depends in part on their type on the process type of industrial process 121.

Security environment 141 is representative of one or more computing devices configured to host machine learning models and security applications to detect anomalous and malicious behavior in PLC 111. Security environment 141 comprises machine learning model repository 142. Machine learning model repository 142 is representative of one or more computing devices configured to host machine learning model 143. For example, repository 142 may comprise an application specific circuit configured to implement a machine learning model. Machine learning model 143 comprises any machine learning models implemented within industrial automation environment 100 as described herein. Machine learning model 143 is configured to ingest operational data that depicts the behavior of PLC 111 and generate machine learning outputs that indicate when PLC 111 deviates from a normal operating behavior. For example, an output may indicate PLC 111 received a control request from an unknown Internet Protocol (IP) address. For example, on output may indicate PLC 111 received a request via HMI 303 from plant personal unauthorized to make the request. Model 143 may be trained using feature vectors that represent a normal operating mode for PLC 111 and can use its trained machine learning algorithms to detect when PLC 111 deviates from the normal operating mode. In some examples, machine learning model repository 142 comprises one or more applications configured to generate feature vectors configured for ingestion by model 142.

Model repository 142 is coupled to user interface 144. User interface 144 comprises displays, keyboards, touchscreens, tablet devices, mobile user equipment, and the like. User interface 144 displays a GUI that allows a user to interact with security module 145 and machine learning model 143. For example, a user may interact with the GUI to receive an alert that machine learning model 143 detected malicious behavior. User interface 144 is configured to display security module 145. Security module 145 is representative of a security application that allows a user to assess PLC 111 and identify abnormal behavior in PLC 111. Security module 145 comprise a PLC model window, a PLC behavior/activity window, and an anomalous activity window. The PLC window may comprise one or more visual elements that depict a normal set of operations for PLC 111. The PLC behavior/activity window may comprise one or more visual elements that depict current operations of PLC 111. The anomalous activity window may comprise one or more visual elements that identifies actions performed by and/or requests received by PLC 111 that model 142 has deemed anomalous. In other examples, that elements that comprise security module 145 may differ.

Programming environment 101, orchestration system 102, HMI 103, PLC 111, devices 131-133, repository 142, and user interface 144 communicate over various communication links using communication technologies like industrial ethernet, Institute of Electrical and Electronic Engineers (IEEE) 702.3 (ENET). IEEE 702.11 (WIFI), Bluetooth, Time Division Multiplex (TDM), Data Over Cable System Interface Specification (DOCSIS). Internet Protocol (IP), General Packet Radio Service Transfer Protocol (GTP), and/or some other type of wireline and/or wireless networking protocol. The communication links comprise metallic links, glass fibers, radio channels, or some other communication media. The links use ENET, WIFI, virtual switching, inter-processor communication, bus interfaces, and/or some other data communication protocols.

Programming environment 101, orchestration system 102, HMI 103, PLC 111, devices 131-133, repository 142, and user interface 144 comprise microprocessors, software, memories, transceivers, bus circuitry, and the like. The microprocessors comprise Central Processing Units (CPUs), Graphical Processing Units (GPUs), Digital Signal Processors (DSPs), Application-Specific Integrated Circuits (ASICs), Field Programmable Gate Arrays (FPGAs), and/or the like. The memories comprise Random Access Memory (RAM), flash circuitry, Hard Disk Drives (HDDs), Solid State Drives (SSDs), Non-Volatile Memory Express (NVMe) SSDs, and/or the like. The memories store software like operating systems, user applications, networking applications, control applications, security application, machine learning interface applications, and the like. The microprocessors retrieve the software from the memories and execute the software to drive the operation of industrial automation environment 100 as described herein.

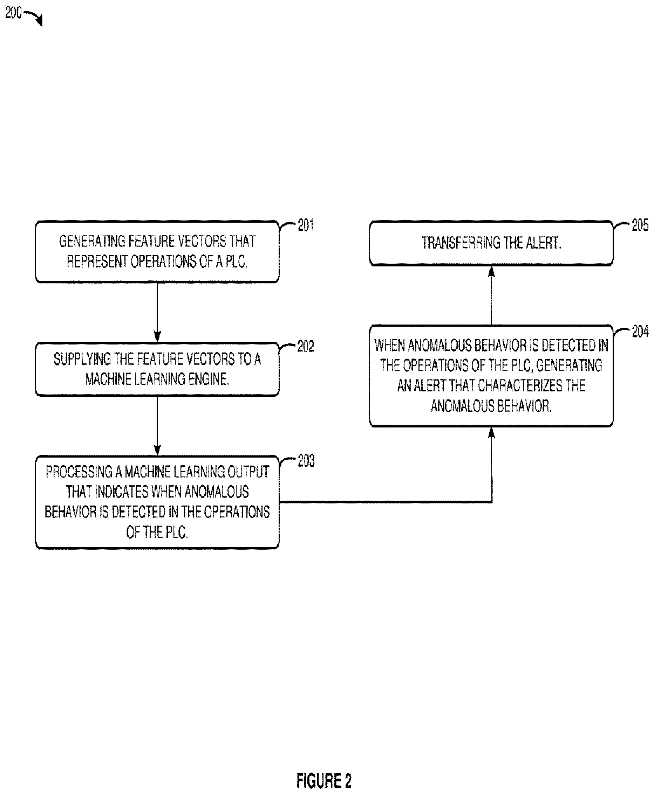

In some examples, industrial automation environment 100 implements process 200 illustrated in Figure 2. It should be appreciated that the structure and operation of industrial automation environment 100 may differ in other examples.

Figure 2 illustrates process 200. Process 200 comprises a malicious behavior detection process in a PLC of the industrial automation environment. Program 200 may be implemented in program instructions in the context of any of the software applications, module components, machine learning components, or other such elements of one or more computing devices. The program instructions direct the computing device(s) to operate as follows, referred to in the singular for the sake of clarity.

In operation, process 200 begins by generating feature vectors that represent operations of a PLC (step 201). The operation continues by supplying the feature vectors to a machine learning engine (step 202). The operation continues by processing a machine learning output that indicates when anomalous behavior is detected in the operations of the PLC (step 203). The operation continues by, when anomalous behavior is detected in the operations of the PLC, generating an alert that characterizes the anomalous behavior (step 204). The operation continues by transferring the alert (step 205).

Referring back to Figure 1, industrial automation environment 100 includes a brief example of process 200 as employed by one or more applications hosted by the various computing devices comprising industrial automation environment 100.

In operation, a design application hosted by computing device in programming environment 101 generates a control program that is configured for implementation by PLC 111. For example, the design application may receive user inputs via a user interface and responsively generate a control program based on the user inputs. The user inputs may comprise clicks, drag-and-drop actions, touch screen inputs, keyboard inputs, and the like. The control program comprises a set of program tags. The program tags comprise control code that drive the operation of industrial process 121. Programming environment 101 uploads the control program to PLC 111. Orchestration system 102 directs PLC to implement the control program received from programming environment 101. In response to the program and direction, PLC 111 executes the control program. PLC 111 generates control signaling based on the execution of the control program and transfers the control signaling to industrial devices 131-133 to implement process 121. industrial devices 131-133 operate in response to the control signaling and generate process data that characterizes their operations. For example, the operational data may comprise metrics like operating speed, operating temperature, units consumed, units produced, and the like. Industrial devices transfer the operational data to PLC 1 11. PLC 111 receives inputs from HMI that tune the control operations of PLC 111 based on the operational data generated by industrial devices 131-133.

PLC 111 transfers operational data that indicates its operations to security environment 141. For example, the operational data may indicate control outputs implemented by PLC 111, control requests received by PLC 111, the origin/type of requests, the time and day a request is received, the control program type executed by PLC 111, and the like. Security module 145 receives the PLC operational data from PLC 111 and responsively generates feature vectors that represent the operations of PLC 111 (step 201). The feature vectors comprise sets of numeric values that represent the PLC operational data and that are ingestible by a machine learning model. For example, security module 145 may run a feature extraction process of the PLC operation data to generate derivative values that represent the operational data and may group the derivative values together to form the feature vectors. Security module 145 supplies the feature vectors to machine learning model repository 142 (step 202).

Machine learning model 143 ingests the feature vectors generated by security module 145. Machine learning model 143 utilizes its constituent machine learning algorithms to process the feature vectors and generate a machine learning output. The machine learning output comprises an indication as to whether the current operations of PLC 111 differ substantially from normal operation behavior. For example, the output may indicate that the current behavior of PLC 111 exhibited a set of prohibited actions (e.g.. receiving a request from a non-approved IP address). Machine learning model repository 142 transfers the machine learning output to security module 145. Security module 145 processing the machine learning output that indicates when anomalous behavior is detected in the operations of PLC 111 (step 203). For example, security module 145 may apply a threshold, white/blacklist, or some other type of security indicator to the machine learning output to determine the anomalous behavior. Alternatively, the machine learning output may identify the anomalous behavior without additional processing from security module 145.

When anomalous behavior is detected in the operations of PLC 111. Security module 145 generates an alert that characterizes the anomalous behavior (step 204). For example, Security module 145 may present the alert on user interface 144 in the anomalous activity window. Security module 145 transfers the alert to other systems in industrial automation environment 100 (step 205). By transferring the alert, security module 145 can drive the other systems in environment 100 to respond to the anomalous behavior. For example, security module 145 may have identified that PLC 111 received a request to perform an undesired control action (e.g., shutting down process 121) from a malicious source. In response, security module 145 may transfer the alert to orchestration system 102 to block requests from the malicious source.

Advantageously, industrial automation environment 100 effectively utilizes machine learning systems to improve the security of PLCs. Moreover, security environment 141 employs machine learning model 143 to detect when anomalous behavior occurs in PLC 111.

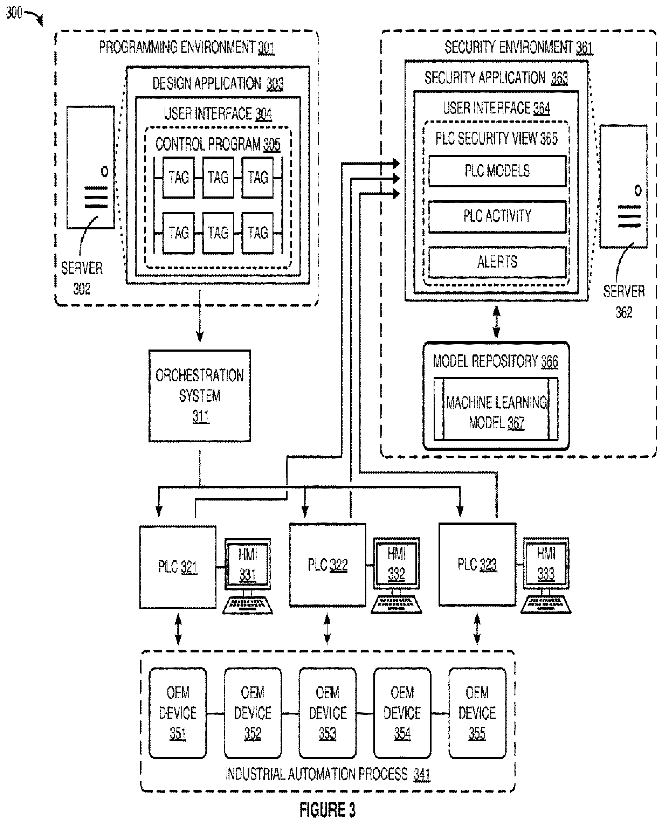

Figure 3 illustrates industrial automation environment 300 to detect malicious behavior in a PLC. Industrial automation environment 300 comprises an example of industrial automation environment 100, however environment 100 may differ. Industrial automation environment 300 comprises programming environment 301, orchestration system 311, Programmable Logic Controllers (PLCs) 321-323, Human Machine Interfaces (HMIs) 331-333, industrial automation process 341, Original Equipment Manufacturer (OEM) devices 351-355, and security environment 361. Programming environment 301 comprises server 302, application 303, user interface 304, and control program 305. Security environment 361 comprises server 362, security application 363, user interface 364, PLC security view 365, model repository 366, and machine learning model 367. PLC security view 365 comprise visual elements for PLC models, PLC activity, and alerts.

Programming environment 301 is representative of one or more computing devices integrated into a network configured to generate control programs for industrial automation environment 300. Programming environment 301 comprises server 302. Server 302 comprises one or more computing device configured to host application 303. The one or more computing devices that comprise server 302 comprise processors, bus circuitry, storage devices, software, and the like. The processors may comprise CPUs. GPUs, DSPs, ASICs, FPGAs, and the like. The storage devices comprise flash drives, RAM, HDDs, SSDs, NVMe SSDs, and the like. The storage devices store the software like application 303. The processors may retrieve and execute software stored on the storage devices to drive the operation of application 303. Application 303 is representative of one or more integrated design applications, user interface applications, operating systems, modules, and the like. Application 303 is configured to receive user inputs via user interface 304 and generate control program 305 based on the user inputs and/or other types of inputs.

User interface 304 is representative of a display that provides a graphical representation of design application 303. The graphical representation may include one or more visual indicators relevant to control program 305, such as visual indicators of visual code blocks, ladder logic, code chunks, functional block diagrams, and/or other types of visual indictors. User interface 304 may comprise a faceplate for viewing or use by an operator or similar user within programming environment 301. User interface 304 may include a computer, a mobile device, a kiosk, a touchscreen device, or some other type of computing device capable of performing the user interface functions described herein. A user may interact with application 303 via user interface 304 to generate control program 305. Upon generation of control program 305, application 303 may transfer control program 305 to implement industrial automation process 341. For example, transceiver circuitry in server 302 may upload control program 305 to PLCs 321-323 via industrial ethernet links.

Orchestration system 311 is representative of one or more computing devices integrated into a network configured to manage and coordinate the operation of PLCs 321-323. Orchestration system 311 hosts one or more orchestration programs configured to manage PLCs 321-323. The orchestration program hosted by system 302 may receive control programs from programming environment 301 and distribute control programs to intended ones of PLCs 321-323. The orchestration program may upload the identified programs to PLCs 321-323 and direct PLCs 321-323 when to activate the uploaded control program. The one or more computing devices of orchestration system 311 comprise processors, bus circuitry, storage devices, software, and the like. The processors may comprise CPUs, GPUs, DSPs, ASICs, FPGAs, and the like. The storage devices comprise flash drives, RAM, flash circuitry, HDDs, SSDs, NVMe SSDs, and the like. The storage devices store the software. The processors may retrieve and execute software stored on the storage devices to drive the operation of orchestration system 311.

Server 302 and is communicatively coupled to PLCs 321-323. PLCs 321-323 comprise one or more computing devices configured to receive and execute control programs to generate control signaling for OEM devices 351-355. PLCs 321-323 controls the automated and coordinated operation of industrial process 341. PLCs 321-323 may implement control programs that may be designed using any number of programming tools in an integrated design environment (e.g., design application 303) such as text-based coding, functional block diagrams, ladder logic, graphics-based programming, or other types of programming interfaces. The control program may be designed or programmed on a design computer running an integrated design environment (e.g., application 303), then transmitted or uploaded to PLCs 321-323. Alternatively, the control program may be implemented with a system of hardware connections in PLCs 321-323 or in programmable PLC modules by which a PLC can be upgraded to add more control capacity as its industrial automation process grows in sophistication.

PLCs 321-323 controls OEM devices 351-355 by sending the control signaling over one or more data channels that support synchronous or asynchronous communications to implement industrial process 341. Industrial process 341 may comprises a process for manufacturing goods but may also comprise processes occurring within a utility plant (e.g., an electrical power plant), research or laboratory facility (e.g., a sample testing or processing facility), processes occurring within a food processing facility (e.g., a cattle processing plant), or any other suitable industrial automated environment. OEM devices 351-355 comprise factory or industrial machinery or manufacturing equipment such as conveyor belts or other conveyance mechanisms, robotic devices or other automated or programmable devices, packaging devices including boxing, capping, and sealing equipment, processing equipment, mixers, filling stations, quality control equipment, and other devices associated with manufacturing or other industrial processes.

PLCs 321-323 comprises one or more computing devices. The one or more computing devices of PLCs 321-323 comprise processors, bus circuitry, storage devices, software, and the like. The processors may comprise CPUs, GPUs, DSPs, ASICs, FPGAs, and the like. The storage devices comprise flash drives, RAM. HDDs, SSDs, NVMe SSDs, and the like. The storage devices store the software. The processors may retrieve and execute software stored on the storage devices to drive the operation of PLCs 321-323.

HMIs 331-333 are representative of one or more computing devices configured to illustrate the operating conditions of PLCs 321-323 and receive user inputs to affect the operations of PLCs 321-323. For example, HMIs 331-333 may receive user inputs from plant operators that comprise control commands for PLCs 321-323 to affect the operating states of OEM devices 351-355. The one or more computing devices comprise processors, bus circuitry, storage devices, software, and the like. The processors may comprise CPUs, GPUs, DSPs, ASICs, FPGAs, and the like. The storage devices comprise flash drives, RAM, HDDs, SSDs, NVMe SSDs, and the like. The storage devices store the software. The processors may retrieve and execute software stored on the storage devices to drive the operation of HMIs 331-333. Although HMIs 331-333 are illustrated as a personal computing device, HMIs 331-333 may comprise server computers, mobile devices, kiosks, touchscreen devices, faceplates, or other types of computing device capable of performing the functions described herein.

Industrial automation process 341 is representative of a manufacturing process, chemical production process, food processing process, or any other type of industrial process. Although industrial automation process 341 is depicted with five OEM devices, in other examples automated systems may comprise a different number of OEM devices. OEM devices 351-355 may comprise devices like pumps, compressors, heat exchanges, centrifuges, mills, conveyers, filters, and the like. OEM devices 351-355 may comprise subcomponents (not illustrated for clarity) like motors, valves, electrical circuitry, processing circuitry, storage circuitry, transceivers, machined parts, and the like.

OEM devices 351-355 are coupled to PLCs 321-323. PLCs 321-323 transfer control signaling generated by the execution of control program 305 to OEM devices 351-355 to implement industrial automation process 341. OEM devices 351-355 receive their respective control signaling and operate according to the instructions. For example, OEM device 351 may comprise an electric motor to drive a pump. PLC 321 may execute the control program (e.g., control program 305) and determine a current level to power the electric motor at to achieve a desired pressure differential in the pump. PLC 321 may transfer control signaling to the motor in OEM device 351. Actuators in the motor of OEM device 351 may receive the control signaling and apply the indicated current level to achieve the necessary power level for the electric motor to drive the motor at the speed necessary to achieve the desired pressure differential.

As OEM devices 351-355 operate based on control signaling received from PLCs 321-323, they generate process data that characterizes their operations. The process data indicates the status of variables, operations, and/or processes of OEM devices 351-355. OEM devices 351-355 report their operational process data to PLCs 321-323. For example, OEM 352 may comprise a ball mill and may report its rotations per minute to PLCS 321-323 as process data.

Security environment 361 comprises server 362. Server 362 is representative of one or more computing devices integrated into a network that communicates with programming PLCS 321-323 and model repository 366. Examples of server 362 may include server computers and data storage devices deployed on-premises, in the cloud, in a hybrid cloud, or elsewhere, by service providers such as enterprises, organizations, individuals, and the like. Server 362 may rely on the physical connections provided by one or more other network providers such as transit network providers, Internet backbone providers, and the like for communication purposes. Server 362 is configured to host security application 363 which comprises user interface 364 and PLC security view 365.

Server 362 comprises processors, bus circuitry, storage devices, software, and the like configured to host security application 363. The processors may comprise CPUs, GPUs, DSPs, ASICs, FPGAs, and the like. The storage devices comprise flash drives, RAM, HDDs, SSDs, NVMe SSDs, and the like. The storage devices store the software. The processors may retrieve and execute software stored on the storage devices to drive the operation of security application 363.

Security application 363 is representative of one or more applications configured to monitor the operations of PLCs 321-323, to detect malicious activity, and to present the identified malicious activity to human operators via a user interface. Security application 363 may receive process data from PLCs 321-323 that indicates the behavior of PLCs 321-323. For example, the PLC process data may indicate the types of requests received by PLCs 321-323, the control operations performed by PLCs 321-323, the origins of the received requests, the time and date PLCs 321-323 received the requests, and/or other types of information that indicates the operations and external interactions of PLCs 321-323. Security application 363 may perform a feature extraction process to format the PLC process data for ingestions by machine learning model 367. Upon generation of the feature vectors, security application 363 may transfer the feature vectors for delivery to machine learning model 367.

Security application 354 comprises user interface 364. User interface 364 comprise an on-screen display and may be displayed using a computer, a mobile device, a kiosk, a touchscreen device, or some other type of computing device capable of performing the user interface functions described herein. User interface 364 comprises PLC security view 365. PLC security view 365 is representative of one of more visual elements on user interface 365 that communicate to a user normal operating behavior of PLCs 321-323, current activity occurring on PLCs 321-323, alerts indicating anomalous behavior observed in PLCs 321-323, and or other information regarding the security of PLCs 321-323. In this example, PLC security view 365 comprise visual elements for PLC models, PLC activity, and alerts, however it should be appreciated PLC security view 365 may comprise different visual elements in other examples. PLC security view 365 may comprise one or more user selectable options to respond to the detection of anomalous behavior in PLCs 321-323. The responses may comprise the generation and transfer of alerts/notifications, PLC deactivation, blocking PLC communication with external systems, and/or other types of PLC security related operations. In some examples, security application 363 receives user inputs via the user selectable options on PLC security view 365 and may operate according to the user selection (e.g., transferring a message to deactivate a PLC upon user request). Security application 363 is communicatively coupled to model repository 366.

Model repository 366 is representative of one or more computing devices configured to implement machine learning model 367. The one or more computing devices of repository 366 comprises processors, bus circuitry, storage devices, software, and the like configured to machine learning model 367. The processors may comprise CPUs, GPUs, DSPs, ASICs, FPGAs, and the like. The storage devices comprise flash drives, RAM, HDDs, SSDs, NVMe SSDs, and the like. The storage devices store the software. The processors may retrieve and execute software stored on the storage devices to drive the operation of machine learning model 367.

Machine learning model 367 comprises one or more machine learning algorithms that are trained to identify anomalous behavior and malicious activity in PLCs 321-323. Machine learning model 367 employ one or more machine learning algorithms through which data can be analyzed to identify patterns, make decisions, make predictions, or similarly produce output that can determine the presence of anomalous and/or malicious activity in PLCs 321-323. Examples of machine learning algorithms that may be employed solely or in conjunction with one another include neural network auto encoders, unsupervised anomaly detection algorithms, artificial neural networks, nearest neighbor methods, ensemble random forests, support vector machines, naïve Bayes methods, linear regressions, or other types of machine learning algorithms that predict output data based on input data. Determining which machine learning methods to use may depend on the specific purpose or functions required in a particular industrial setting. Machine learning model 367 may utilize supervised learning methods, unsupervised learning methods, and/or reinforcement learning methods to train itself. The training data for model 367 may comprise feature vectors that comprise numeric representations of normal PLC operations. Machine learning model 367 utilize the training data to construct model representations of PLCs 321-323 and compare the model representations to current PLC behavior to identify when anomalous or malicious behavior occurs.

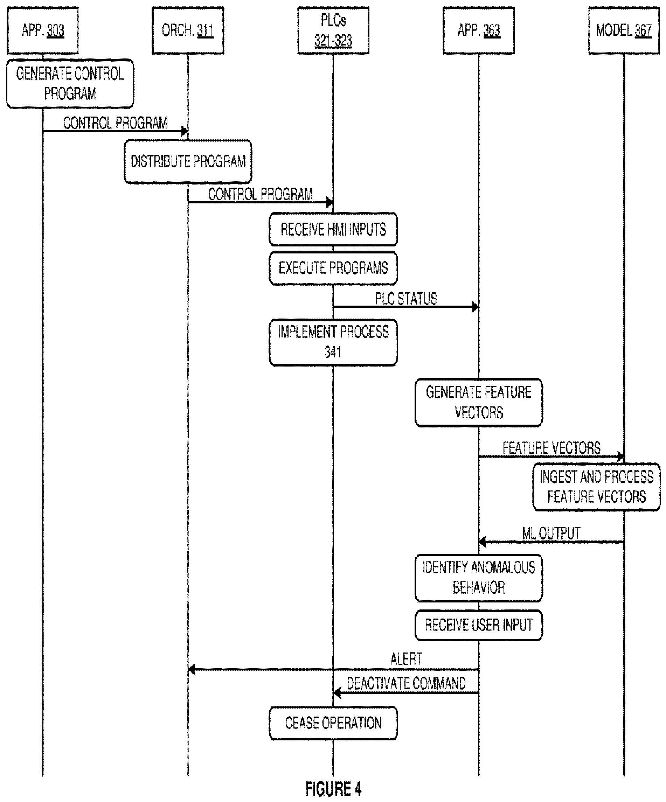

Figure 4 illustrates an exemplary operation of industrial automation environment 300 to detect malicious behavior in a PLC. The operation depicted by Figure 4 comprises an example of process 200 illustrated in Figure 2, however process 200 may differ. In other examples, the structure and operation of industrial automation environment 300 may be different.

In operation, design application (APP.) 303 generates control program 305. Control program 305 is configured for execution by PLCS 321-323 to drive the operation of OEM devices 351-355. For example, design application 303 may receive a series of drag-and-drop user inputs via user interface 304 that cause application 303 to construct control program 305. Design application 303 transfers control program 305 to orchestration system (ORCH.) 311. Orchestration system 311 distributes control program 305 to PLCs 321-323 and coordinates the operation of PLCs 321-323. For example, orchestration system 311 may coordinate the operation of PLCs 321-323 based on a user generated operating schedule.

PLCs 321-323 receive control program 305 and direction from orchestration system 311 to implement control program 305. For example, orchestration system 311 may direct PLCs 321-323 when to implement control program 305 via an industrial ethernet link. Additionally, PLCs 321-323 receive user inputs via HMIs 331-333 to augment the execution of control program 305. The user inputs may adjust preset execution parameters used by PLCs 321-323 based on a current plant status. For example, environment 300 may lack sufficient process inputs for industrial automation process 341 and the HMI user inputs may augment the execution of control program 305 to slow the operation of process 341 as to not exhaust the insufficient process inputs.

PLCs 321-323 report their status to security application (APP.) 363. This may comprise transferring status reports to security application 363 that detail the HMI inputs received by PLCs 321-323, control programs executed by PLCs 321-323, coordination instructions received by PLCs 321-323, and/or other types of data that characterizes the current operating state of PLCs 321-323.

PLCs 321-323 executes control program 305 and transfers corresponding control signaling to OEM devices 351-355 to implement industrial process 341. For example, OEM device 351 may comprise a heat exchanger and control program 305 may dictate a temperature differential setting for OEM 353. PLC 322 may execute instructions control program 305 and determine a valve setting to achieve a cold-water flow rate that results in the desired temperature differential. PLC 322 may transfer executed instructions of control program 305 to OEM device 353. In response, OEM device 353 may activate valve actuators and set the valve to the position indicated by the instructions. OEM devices 351-355 of industrial automation process 341 receive the control signaling from PLCs 321-323. OEM devices 351-355 implement industrial automation process 341 as dictated by the control signaling generated by the execution of control program 305. OEM devices 351-355 generate process data based on their operations and transfer the process data to PLCs 321-323.

In response to receiving the PLC status reports from PLCs 321-323, security application 363 executes a feature extraction process on the PLC status reports to generate feature vectors that represent the status reports. Security application 363 uploads the feature vectors to model repository 366. Machine learning model 367 ingests and processes the feature vectors received by repository 366. Machine learning model 367 generates a machine learning output that indicates existence of anomalous behavior in PLCs 321-323. The anomalous behavior may indicate a mistake made in the generation and execution of control program 305. For example, the execution start time of control program 305 may differ substantially from historical execution start times previously used in environment 100. Alternatively, the anomalous behavior may indicate malicious activity. For example, model 367 may process the feature vectors using its machine learning algorithms and determine that PLCs 321-323 received HMI inputs via HMIs 331-333 that originated from an unknown IP address. Model 367 transfers the machine learning output for delivery to security application 363.

Security application 363 receives the machine learning output and identifies the anomalous behavior in PLCs 321-323 based on the machine learning output. Security application 363 displays the identified anomalous behavior in PLC security view 365 via user interface 364. Security application 363 receives user inputs via user interface 364 that drive security application 363 to transfer alerts indicating the anomalous behavior and transfer deactivation commands to PLCs 321-323. Security application 363 transfers the alert to orchestration system 311 to notify orchestration system 311 about the identified anomalous behavior. For example, security application 363 may drive transceiver circuitry in server 362 to transfer the alert. Security application 363 transfers the deactivation command to PLCs 321-323. PLCs 321-323 receive the deactivation command and responsively cease operation. By ceasing operation, PLCs 321-323 inhibit the anomalous behavior from affecting process 341 and/or other elements within industrial automation environment 300.

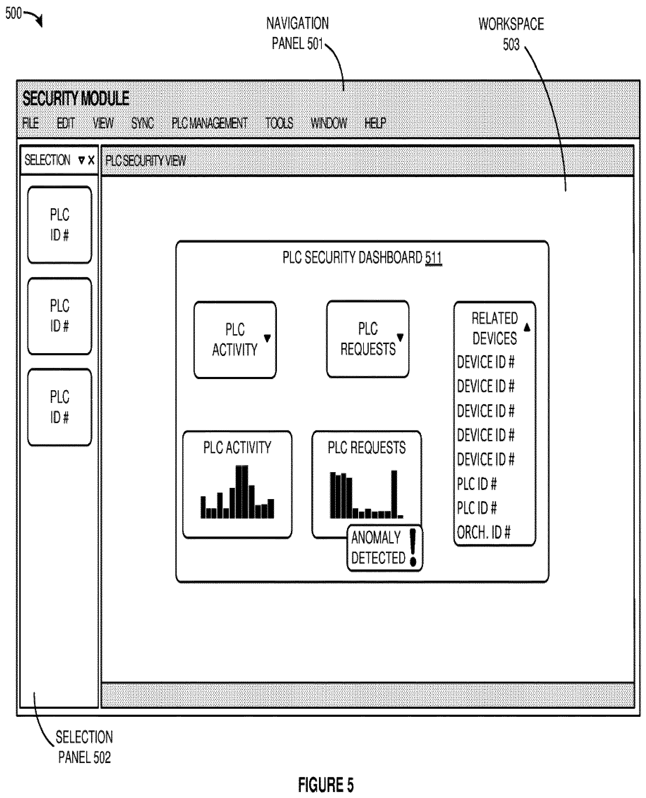

Figure 5 illustrates user interface 500 to detect malicious behavior in a PLC. User interface 500 comprises an example of user interface 144 and user interface 364, however user interface 144 and user interface 364 may differ. User interface 500 comprises a security application presented on a display screen which is representative of any user interface for detecting malicious and/or anomalous behavior in a PLC. For example, user interface 500 may comprise a GUI configured to allow a user to interact with a security application and corresponding machine learning system.

User interface 500 includes navigation panel 501 that allows a user to access the various features available through user interface. Navigation panel 501 comprises tabs like file, edit, view, library management, tools, window, and help. In other examples, navigation panel 501 may comprise fewer tabs, more tabs, and/or different types of tabs. A user may select a tab to access the functionality of the tab. Upon selection, the tabs may open drop down menus that list their functionality. For example, a user may select the file tab and select an option from a drop-down menu to save a project to memory. Navigation panel 501 is located on a top portion of user interface 500 however navigation panel 501 may be located on a different portion of user interface 500. For example, navigation panel 501 may be located on the bottom portion of user interface 500.

User interface 500 incudes selection panel 502. Selection 502 panel comprises a device selection system that allows a user to select PLCs and view a corresponding security view for the selected PLC. In this example, selection panel 502 comprise three selectable PLC icons. The selectable PLC icons comprise ID numbers that indicate which PLC devices the icons correspond to. In other examples, selection panel 502 may comprise a different number of PLC icons and the PLC icons may include additional or different information. For example, the PLC icons may indicate network and physical locations, active/inactive status, and the like. Selection panel 502 is located on a left portion of user interface 500 however selection panel 502 may be located on a different portion of user interface 500. For example, selection panel 502 may be located on the right portion of user interface 500.

User interface 500 includes workspace 503. Workspace 503 is representative of a computing interface that allows a human operator to view the security status of PLCs within an industrial automation environment. Workspace 503 comprises PLC security dashboard 511. PLC security dashboard 511 is representative a computing interface with user selectable options that allows a user to view the security status and related information of a PLC in an industrial automation environment. For example, a user may have selected one of the PLC icons in PLC selection panel 502 to assess the security status of the corresponding PLC device and the user interface may responsively present PLC security dashboard 511 for that PLC device in workspace 503. PLC security dashboard 511 comprises user selectable options labeled PLC Activity, PLC Requests, and Related Devices. The user selectable options comprise drop-down menus that, in response to selection by a user, open to reveal their contents. In this example, a user has selected the Related Devices option to view device IDs, PLC IDs, and orchestration system IDs related to the selected PLC device. In other examples, a user may select the options for PLC Activity and/or PLC Requests to view their contents.

PLC security dashboard 511 additional comprises visual elements labeled PLC Activity and PLC Requests that provide graphical representations of the PLC status. For example, the visual element for PLC Activity may graphically illustrate the number of control outputs generated by a PLC over time. For example, the visual element for PLC Requests may graphically illustrate the number/origin of requests received by the PLC. In other examples, the visual element for PLC Activity and/or the visual element for PLC Requests may graphically illustrate other types of information related to the PLC.

In this example, the visual element for PLC Requests is labeled with an alert notification labeled Anomaly Detected which indicates that an anomaly has been detected in the requests received by the PLC. For example, a machine learning model operatively coupled to user interface 500 may have processed feature vectors representing the operations of the PLC and generated a machine learning output that indicates an anomaly in the requests received by the PLC has occurred. In response, user interface may mark the visual indicator for PLC requests with the Anomaly Detected notification. A user may select the Anomaly Detected notification to address the detected anomaly. In other examples, user interface may mark a different element of PLC security dashboard 511 with an Anomaly Detected notification.

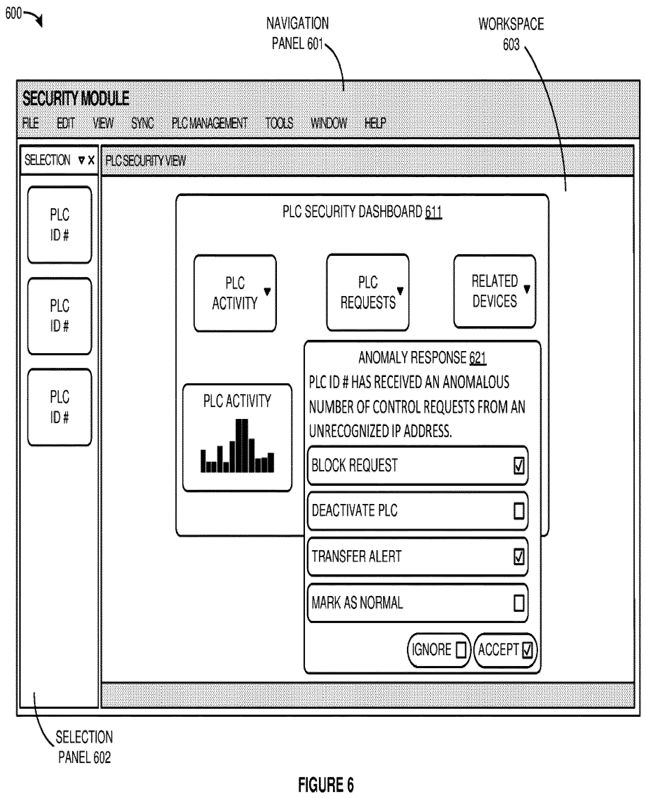

Figure 6 illustrates user interface 600 to detect malicious behavior in a PLC. User interface 600 comprises an example of user interface 144 and user interface 364, however user interface 144 and user interface 364 may differ. User interface 600 comprises a security application presented on a display screen which is representative of any user interface for detecting malicious and/or anomalous behavior in a PLC. For example, user interface 600 may be generated in response to the selection of the alert notification labeled Anomaly Detected as illustrated in Figure 5.

User interface 600 includes navigation panel 601 that allows a user to access the various features available through user interface. Navigation panel 601 comprises tabs like file, edit, view, library management, tools, window, and help. In other examples, navigation panel 601 may comprise fewer tabs, more tabs, and/or different types of tabs. A user may select a tab to access the functionality of the tab. Upon selection, the tabs may open drop down menus that list their functionality. Navigation panel 601 is located on a top portion of user interface 600 however navigation panel 601 may be located on a different portion of user interface 600.

User interface 600 incudes selection panel 602. Selection 602 panel comprises a device selection system that allows a user to select PLCs and view a corresponding security view for the selected PLC. In this example, selection panel 602 comprise three selectable PLC icons. The selectable PLC icons comprise ID numbers that indicate which PLC devices the icons correspond to. Selection panel 602 is located on a left portion of user interface 600 however selection panel 602 may be located on a different portion of user interface 600.

User interface 600 includes workspace 603. Workspace 603 is representative of a computing interface that allows a human operator to view the security status of PLCs within an industrial automation environment. Workspace 603 comprises PLC security dashboard 611. PLC security dashboard 611 is representative a computing interface with user selectable options that allows a user to view the security status and related information of a PLC in an industrial automation environment. PLC security dashboard 611 comprises various textual and visual elements that depict the security state of a PLC. Overlaid on PLC security dashboard 611 is anomaly response window 621. Anomaly response 621 comprises a set of user selectable options that allow a user to respond to the detection of an anomaly in the PLC device that corresponds to PLC security dashboard 611. For example, a user may have selected an Anomaly Detected notification (e.g., the Anomaly Detected notification illustrated in Figure 5) and user interface may display anomaly response 621 in response to the selection.

In this example, anomaly response window 621 indicates a PLC has received an anomalous number of control requests from an unrecognized IP address. Anomaly response 621 includes a set of user selectable options to block requests, deactivate the PLC, transfer an alert, and to mark the requests as normal. In other examples, anomaly response 621 may comprise different user selectable options to respond to the detected anomaly. In this example, a user has elected to block the requests and transfer an alert indicating the anomaly. Once a user has finalized their selections, they may select the option labeled Accept to implement their selections. Alternatively, the user may select the option labeled Ignore to close anomaly response window 621 without responding to the detected anomaly. In this example, the user has selected the Accept button to implement their response. In response to the user selection of the Accept button, the security application presented via user interface 600 implements the user selected response to detected anomaly.

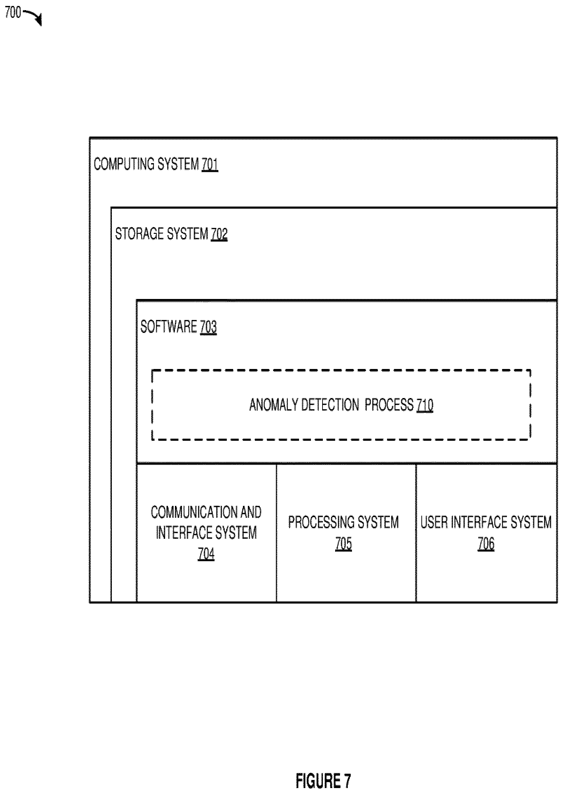

Figure 7 illustrates computing system 701 according to an implementation of the present technology. Computing system 701 is representative of any system or collection of systems with which the various operational architectures, processes, scenarios, and sequences disclosed herein for detecting anomalous behavior in PLCs may be employed. For example, computing system 701 may be representative of programming environment 101, orchestration systems 102 and 311, HMIs 103 and 331-333, PLCs 111 and 321-323, security environment 141, server 302, server 362, repository 366, and/or any other computing device contemplated herein. Computing system 701 may be implemented as a single apparatus, system, or device or may be implemented in a distributed manner as multiple apparatuses, systems, or devices. Computing system 701 includes, but is not limited to, storage system 702, software 703, communication interface system 704, processing system 705, and user interface system 706. Processing system 705 is operatively coupled with storage system 702, communication interface system 704, and user interface system 706.

Processing system 705 loads and executes software 703 from storage system 702. Software 703 includes and implements anomaly detection process 710, which is representative of any of the PLC anomaly detection processes discussed with respect to the preceding Figures, including but not limited to the industrial control, anomalous and malicious activity prevention, and user interface operations described with respect to the preceding Figures. For example, anomaly detection process 710 may be representative of process 200 illustrated in Figure 2 and/or the exemplary operation of environment 300 illustrated in Figure 4. When executed by processing system 705 to detect and prevent anomalous behavior in a PLC, software 703 directs processing system 705 to operate as described herein for at least the various processes, operational scenarios, and sequences discussed in the foregoing implementations. Computing system 701 may optionally include additional devices, features, or functionality not discussed for purposes of brevity.

Processing system 705 may comprise a micro-processor and other circuitry that retrieves and executes software 703 from storage system 702. Processing system 705 may be implemented within a single processing device but may also be distributed across multiple processing devices or sub-systems that cooperate in executing program instructions. Examples of processing system 705 include general purpose CPUs, GPUs, ASICs, FPGAs, and logic devices, as well as any other type of processing device, combinations, or variations thereof.

Storage system 702 may comprise any computer readable storage media readable by processing system 705 and capable of storing software 703. Storage system 702 may include volatile, nonvolatile, removable, and/or non-removable media implemented in any method or technology for storage of information, such as computer readable instructions, data structures, program modules, or other data. Examples of storage media include RAM, read only memory, magnetic disks, optical disks, optical media, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 702 may also include computer readable communication media over which at least some of software 703 may be communicated internally or externally. Storage system 702 may be implemented as a single storage device but may also be implemented across multiple storage devices or sub-systems co-located or distributed relative to each other. Storage system 702 may comprise additional elements, such as a controller, capable of communicating with processing system 705 or possibly other systems.

Software 703 (including anomaly detection process 710) may be implemented in program instructions and among other functions may, when executed by processing system 705, direct processing system 705 to operate as described with respect to the various operational scenarios, sequences, and processes illustrated herein. For example, software 703 may include program instructions for generating feature vector that represent the operations of a PLC and identify anomalous behavior in the PLC based on a machine learning output as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 703 may include additional processes, programs, or components, such as operating system software, virtualization software, or other application software. Software 703 may also comprise firmware or some other form of machine-readable processing instructions executable by processing system 705.

In general, software 703 may, when loaded into processing system 705 and executed, transform a suitable apparatus, system, or device (of which computing system 701 is representative) overall from a general-purpose computing system into a special-purpose computing system customized to detect anomalous and malicious activity in a PLC and present identified anomalous and malicious activity on a user interface as described herein. Indeed, encoding software 703 on storage system 702 may transform the physical structure of storage system 702. The specific transformation of the physical structure may depend on various factors in different implementations of this description. Examples of such factors may include, but are not limited to, the technology used to implement the storage media of storage system 702 and whether the computer-storage media are characterized as primary or secondary storage, as well as other factors.

For example, if the computer readable storage media are implemented as semiconductor-based memory, software 703 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 704 may include communication connections and devices that allow for communication with other computing systems (not shown) over communication networks (not shown). Examples of connections and devices that together allow for inter-system communication may include network interface cards, antennas, power amplifiers, radiofrequency circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 701 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of networks, or variation thereof. The aforementioned communication networks and protocols are well known and an extended discussion of them is omitted for the sake of brevity.

While some examples provided herein are described in the context of computing devices for anomaly detection in a PLC, it should be understood that the condition systems and methods described herein are not limited to such embodiments and may apply to a variety of other industrial automation environments and their associated systems. As will be appreciated by one skilled in the art, aspects of the present invention may be embodied as a system, method, computer program product, and other configurable systems. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Unless the context clearly requires otherwise, throughout the description and the claims, the words "comprise," "comprising," and the like are to be construed in an inclusive sense, as opposed to an exclusive or exhaustive sense; that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number, respectively. The word "or" in reference to a list of two or more items, covers all of the following interpretations of the word: any of the items in the list, all of the items in the list, and any combination of the items in the list.

The phrases "in some embodiments," "according to some embodiments," "in the embodiments shown," "in other embodiments," and the like generally mean the particular feature, structure, or characteristic following the phrase is included in at least one implementation of the present technology and may be included in more than one implementation. In addition, such phrases do not necessarily refer to the same embodiments or different embodiments.

The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having steps, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for" but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A system to detect malicious behavior in an industrial automation environment, the system comprising:
a memory that stores executable components; and
a processor, operatively coupled to the memory, that executes the executable components, the executable components comprising:
a security component configured to generate feature vectors that represent operations of a Programmable Logic Controller (PLC) and supply the feature vectors to a machine learning engine;
the security component configured to process a machine learning output that indicates when anomalous behavior is detected in the operations of the PLC; and
when anomalous behavior is detected in the operations of the PLC, the security component configured to generate and transfer an alert wherein the alert characterizes the anomalous behavior.

2. The system of claim 1 further comprising:
a machine learning component configured to ingest the feature vectors, process the feature vectors using machine learning algorithms to detect the anomalous behavior in the operations of the PLC, and generate the machine learning output that indicates when the anomalous behavior is detected.

3. The system of claim 1 or 2 further comprising:
the security component configured to generate training feature vectors that represent a normal set of operations of the PLC and supply the training feature vectors to the machine learning engine.

4. The system of one of claims 1 to 3 wherein the machine learning engine comprises unsupervised anomaly detection algorithms, and/or neural network auto-encoders.

5. The system of one of claims 1 to 4, at least one of:
wherein the anomalous behavior comprises at least one of a type of request, a time of request, an Internet Protocol (IP) address of a request, a process state of the PLC, control outputs generated by the PLC, or personal information; and
the system further comprising:
the security component configured to deactivate the PLC in response to the detection of the anomalous behavior in the operations of the PLC.

6. A method to detect malicious behavior in an industrial automation environment, the method comprising:
generating, by a system comprising a processor, feature vectors that represent operations of a Programmable Logic Controller (PLC);
supplying, by the system, the feature vectors to a machine learning engine;
processing, by the system, a machine learning output that indicates when anomalous behavior is detected in the operations of the PLC;
when anomalous behavior is detected in the operations of the PLC, generating, by the system, an alert wherein the alert characterizes the anomalous behavior; and
transferring, by the system, the alert.

7. The method of claim 6 further comprising:
ingesting, by the system, the feature vectors;
processing, by the system, the feature vectors using machine learning algorithms to detect the anomalous behavior in the operations of the PLC; and
generating, by the system, the machine learning output that indicates when the anomalous behavior is detected.

8. The method of claim 6 or 7 further comprising:
generating, by the system, training feature vectors that represent a normal set of operations of the PLC and supplying the training feature vectors to the machine learning engine.

9. The method of one of claims 6 to 8 wherein the machine learning engine comprises unsupervised anomaly detection algorithms.

10. The method of one of claims 6 to 8 wherein the machine learning engine comprises neural network auto-encoders.

11. The method of one of claims 6 to 10 wherein the anomalous behavior comprises at least one of a type of request, a time of request, an Internet Protocol (IP) address of a request, a process state of the PLC, control outputs generated by the PLC, or personal information.

12. The method of one of claims 6 to 11 further comprising:
deactivating, by the system, the PLC in response to the detection of the anomalous behavior in the operations of the PLC.

13. A non-transitory computer-readable medium stored thereon instructions to detect malicious behavior in an industrial automation environment that, in response to execution, cause a system comprising a processor to perform operations, the operations comprising:
generating feature vectors that represent operations of a Programmable Logic Controller (PLC);
supplying the feature vectors to a machine learning engine;
processing a machine learning output that indicates when anomalous behavior is detected in the operations of the PLC;
when anomalous behavior is detected in the operations of the PLC, generating an alert wherein the alert characterizes the anomalous behavior; and
transferring the alert.

14. The non-transitory computer-readable medium of claim 13, the operations further comprising:
ingesting the feature vectors;
processing the feature vectors using machine learning algorithms to detect the anomalous behavior in the operations of the PLC; and
generating the machine learning output that indicates when the anomalous behavior is detected.

15. The non-transitory computer-readable medium of claim 13 or 14, at least one of:
the operations further comprising generating training feature vectors that represent a normal set of operations of the PLC and supplying the training feature vectors to the machine learning engine;
wherein the machine learning engine comprises unsupervised anomaly detection algorithms;
wherein the machine learning engine comprises neural network auto-encoders; and
wherein the anomalous behavior comprises at least one of a type of request, a time of request, an Internet Protocol (IP) address of a request, a process state of the PLC, control outputs generated by the PLC, or personal information.
